# EUROPEAN PATENT APPLICATION

(11) **EP 2 738 467 A2**
(43) Date of publication of application: **04.06.2014**
(21) Application number: 13194987.7
(22) Date of filing: 29.11.2013
(51) Int. Cl.: F23J 15/02, F23C 9/00

(54) **System and method for burning vanadium-containing fuels**

(30) Priority: 30.11.2012 US 201213690057
(71) Applicant: General Electric Company, Schenectady, New York 12345 (US)
(72) Inventor: Elkady, Ahmed Mostafa, Niskayuna, NY 12309 (US); Mohamed, Sherif Hatem Abdulla, Niskayuna, NY 12309 (US); Joshi, Narendra Digamber, Niskayuna, NY 12309 (US); Karim, Hasan, Niskayuna, NY 12309 (US); Kraemer, Gilbert Otto, Niskayuna, NY 12309 (US); Draper, Samuel David, Niskayuna, NY 12309 (US); Raman, Ashwin, Niskayuna, NY 12309 (US)
(74) Representative: Cleary, Fidelma

(57) **Abstract**

In one aspect, a combustion system (10) is configured to facilitate preventing the formation of vanadium pentoxide (V₂O₅) and decrease a concentration of at least one of vanadium trioxide (V₂O₃) and vanadium tetroxide (V₂O₄) particles in an exhaust. The combustion system (10) includes a vanadium-containing fuel (14) and a combustor (12). The combustor (12) is configured to generate a combustor exhaust gas (22) including vanadium trioxide (V₂O₃) and/or vanadium tetroxide (V₂O₄) particles and to combust a reduced-oxygen mixture including the vanadium-containing fuel (14), ambient air (20), and a portion of the combustor exhaust gas (18). The combustion system (10) also includes a particle separator (24) configured to remove substantially all of the V₂O₃ and/or V₂O₄ particles from the combustor exhaust gas (22).

## Description

### BACKGROUND

The subject matter disclosed herein relates to burning vanadium-containing fuels, and, more particularly, to systems and methods for burning vanadium-containing fuels in gas turbine engines without the use of fuel additives.

Vanadium concentrations in petroleum fuels range from less than 0.5 ppm in distillate fuels to as much as 400 ppm in low-grade fuels. Low-grade fuels are inexpensive fuels and desirable for use in gas turbine engines. However, corrosion problems associated with vanadium-containing deposits on gas turbine engine surfaces limit the use of the cheaper, low-grade fuels. During combustion, vanadium forms vanadium oxides, including vanadium pentoxide (V₂O₅), which has a highly corrosive effect on gas turbine engine components.

Present practice is to treat low-grade fuels with vanadium oxide inhibitors, such as magnesium additives, that convert the vanadium contaminates into solid magnesium vanadates resulting in solid, non-corrosive ash deposits on the turbine blades. While these ash deposits are non-corrosive, the deposits can be detrimental to gas turbine engine operation. The use of magnesium as an additive results in the accumulation of these ash-like deposits on the interior gas turbine engine parts, which requires periodic shutdown and cleaning of the gas turbine engine to remove the deposits. In some instances, the gas turbine engine may need to be shut down and cleaned in a water wash process on a weekly basis. In addition to short waster wash cycles, higher efficiency gas turbine engines with high firing temperatures may depend upon nozzle and bucket cooling by injecting air across the surfaces of these parts. Solid magnesium vanadate deposits can plug the air cooling ports and lead to overheating. Thus, gas turbine engines capable of high efficiency operation on clean distillate fuels are generally de-rated for operation on low-grade, vanadium-containing fuels. Accordingly, it is desirable to decrease the formation of V₂O₅ when burning low-grade, vanadium-containing fuels without the use of magnesium additives and to remove vanadium oxides present in lower oxidation states from the exhaust gas.

### BRIEF DESCRIPTION

In one aspect, a combustion system is provided. The combustion system includes a vanadium-containing fuel supplied to a combustor. The combustion system also includes at least one combustor configured to combust a reduced-oxygen mixture comprising the vanadium-containing fuel, ambient air, and at least a portion of a combustor exhaust gas, thereby facilitating the prevention of the formation of V₂O₅. The combustor is further configured to generate the combustor exhaust gas including at least one of V₂O₃ and V₂O₄ particles. The combustion system also includes a particle separator that is configured to receive the combustor exhaust gas from the combustor. The particle separator is further configured to remove substantially all of the V₂O₃ particles and/or the V₂O₄ particles from the combustor exhaust gas.

In another aspect, a method for combusting fuel is provided. The method includes channeling a vanadium-containing fuel to at least one combustor. The method also includes channeling at least a portion of a combustor exhaust gas to the at least one combustor to generate a reduced-oxygen mixture. Additionally, the method includes combusting the reduced-oxygen mixture in the at least one combustor to generate the combustor exhaust gas including at least one of V₂O₃ particles and vanadium tetroxide V₂O₄ particles, wherein combusting the reduced-oxygen mixture facilitates preventing the formation of vanadium pentoxide V₂O₅. The method further includes channeling the combustor exhaust gas to a particle separator and removing substantially all of the V₂O₃ particles and/or the V₂O₄ particles from the combustor exhaust gas.

In another aspect, a power generation system is provided. The power generation system includes at least one a gas turbine engine and a vanadium-containing fuel supply to the gas turbine engine. The gas turbine engine includes a rotatable shaft, at least one combustor, at least one compressor, and at least one turbine connected to the rotatable shaft. The combustor is configured to burn a reduced-oxygen mixture of the vanadium-containing fuel, air, and at least a portion of gas turbine engine exhaust gas, thereby facilitating the prevention of the formation of V₂O₅ particles. Additionally, the combustor is configured generate the combustor exhaust gas that contains at least one of V₂O₃ and V₂O₄ particles. The turbine is connected downstream of the combustor and is configured to receive and extract energy from the combustor exhaust gas, and discharge a turbine exhaust gas. Furthermore, the power generation system also includes a particle separator configured to remove substantially all of the V₂O₃ and V₂O₄ particles from at least one of the combustor exhaust gas and the turbine exhaust gas.

### DRAWINGS

FIG. 1 is a schematic view of the exemplary combustion system configured for burning a vanadium-containing fuel.
FIG. 2 is a schematic view of another exemplary combustion system of the exemplary combustion system of FIG 1.
FIG. 3 is a flow chart of a method for decreasing a concentration of at least one of vanadium trioxide (V₂O₃) and vanadium tetroxide (V₂O₄) particles in the combustor exhaust gas of the exemplary combustion system of FIG 1.
FIG. 4 is a schematic view of an exemplary power generation system including at least one gas turbine engine that bums a vanadium-containing fuel using the exemplary combustion system of FIG. 1.
FIG. 5 is a schematic view of an exemplary power generation system of the exemplary power generation system of FIG. 4.
FIG. 6 is a schematic view of another exemplary power generation system of the exemplary power generation system of FIG. 4.
FIG. 7 is a schematic view of another exemplary power generation system of the exemplary power generation system arrangements of FIGS. 4 and 6.
FIG. 8 is a schematic view of another exemplary power generation system of the exemplary power generation system arrangements of FIGS. 4, 5, and 6.
FIG. 9 is a schematic view of another exemplary power generation system of the exemplary power generation system arrangements of FIGS. 4, 7, and 8.
FIG. 10 is a schematic view of another exemplary power generation system of the exemplary power generation system arrangements of FIGS. 4 and 7.
FIG. 11 is a schematic view of another exemplary power generation system of the exemplary power generation system arrangements of FIGS. 4, 7, and 10.
FIG. 12 is a schematic view of another exemplary power generation system of the exemplary power generation system arrangements of FIGS. 4, 5, and 10.
FIG. 13 is a schematic view of another exemplary power generation system of the exemplary power generation system arrangements of FIGS. 4, 11, and 12.

Although specific features of various embodiments may be shown in some drawings and not in others, this is for convenience only. Any feature of any drawing may be referenced and/or claimed in combination with any feature of any other drawing.

### DETAILED DESCRIPTION

The features, functions, and advantages described herein may be achieved independently in various embodiments of the present disclosure or may be combined in yet other embodiments, further details of which may be seen with reference to the following description and drawings. As used herein, an element or step recited in the singular and preceded with the word "a " or "an " should be understood as not excluding plural said elements or steps, unless such exclusion is explicitly stated. Furthermore, references to "one embodiment" are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property.

Approximating language, as used in the following specification and claims, may be applied to modify any quantitative representation that could permissibly vary without resulting in a change in the basic function to which it is related. Accordingly, a value modified by a term or terms, such as "approximately," "about," and "substantially," is not to be limited to the precise value specified. In at least some instances, the approximating language may correspond to the precision of an instrument for measuring the value. In the following specification and the claims, range limitations may be combined or interchanged; such ranges are identified and include all the sub-ranges contained therein unless context or language indicates otherwise.

The systems and methods described herein relate to burning low-grade, vanadium-containing fuels without the use of vanadium oxide inhibitors, such as magnesium additives. In combustion systems burning low-grade, vanadium-containing fuels, the present systems and methods provide for generating solid vanadium trioxide (V₂O₃) and/or vanadium tetroxide (V₂O₄) particles in an exhaust gas, for removing the V₂O₃ and V₂O₄ particles from the exhaust gas, and for facilitating the prevention of vanadium pentoxide (V₂O₅) formation in the exhaust gas. Generating V₂O₃ and V₂O₄ while limiting the formation of V₂O₅ is desirable because the first two oxides, V₂O₃ and V₂O₄, can be considered refractory oxides (with melting points in excess of 3450 degrees Fahrenheit (°F)). The melting point of V₂O₅, however, is about 1270 °F. Thus, V₂O₅ is a liquid at typical gas turbine engine operating temperatures and has a highly corrosive effect on the engine components.

In an exemplary combustion system, a portion of the exhaust gas from the combustion system is circulated into the inlet of the combustion system, then mixed with ambient air before being introduced to the combustor of the combustion system. As a result, the mixture used for combustion has a lower percentage of oxygen than ambient air. This reduced-oxygen gas is burned in the combustor with the vanadium-containing fuel, resulting in an exhaust gas that is substantially oxygen-free. Additionally, the percentage of carbon dioxide (CO₂) in the exhaust gas is higher as a portion of the exhaust gas is circulated to the combustion system inlet, which enhances the CO₂ separation processes downstream. The exhaust gas is passed through a vanadium oxide particle separator to remove solid vanadium oxides, such as V₂O₃ and V₂O₄, before being circulated to the combustion system inlet. This separation process provides clean exhaust gas to the combustion system inlet, thereby preventing damage to the internal components of the combustion system.

In the above exemplary combustion system, it has been unexpectedly discovered that burning low-grade, vanadium-containing fuels without the use of vanadium oxide inhibitors, such as magnesium additives, and using high levels of exhaust gas recirculation (EGR) (ranging between approximately 30% and 70% by volume) facilitates preventing the formation of V₂O₅ by reducing the percentage of oxygen in the reduced-oxygen mixture burned in the combustor. By producing a substantially oxygen-free exhaust gas, i.e., limiting the concentration of oxygen in the exhaust gas to less than 1% by volume, it was discovered that the oxidation reactions of V₂O₃ and V₂O₄ to the corrosive V₂O₅ may be stopped.

A substantially oxygen-free exhaust from the exemplary combustion system may be accomplished by substantially stoichiometric burning in the combustor. That is, the oxygen-containing fresh air supply may be matched to the fuel flow such that combustion operates within slight deviations from stoichiometry. In other words, the amount of vanadium containing fuel and air mixed in the combustor may include a composition in which the mole ratio slightly deviates from the stoichiometric ratio.

Eliminating the formation of the corrosive V₂O₅ permits the use vanadium-containing fuels without the need for magnesium additives or other vanadium oxidation inhibitors, which in turn allows the exemplary combustion system to be operated at higher combustion temperatures thus increasing efficiency. The use of a high percentage of EGR provides additional benefits such as reducing nitrogen oxide (NO_{X}) emissions and increasing the concentration of CO₂ in the exhaust gas (thus significantly reducing the difficulty and cost to isolate and separate the CO₂ using conventional means).

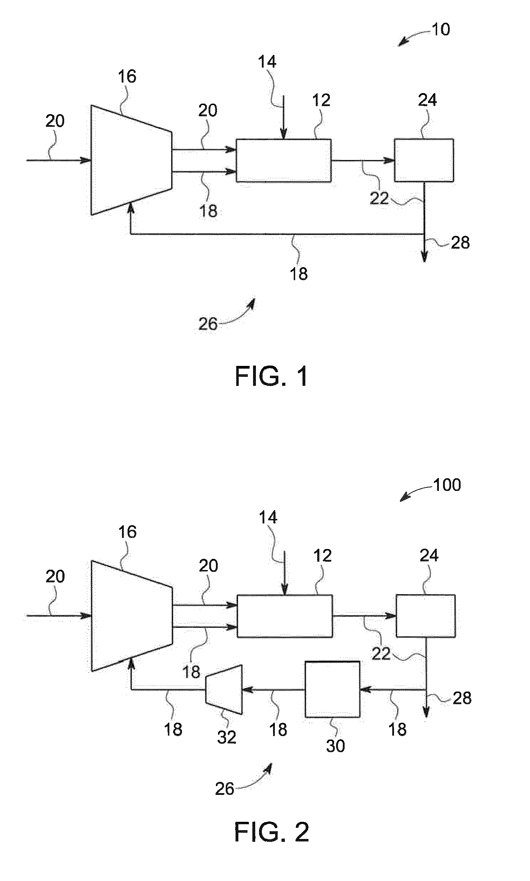

FIG. 1 is a schematic view of an exemplary combustion system 10 configured for burning a vanadium-containing fuel. The combustion system 10 includes a combustor 12 configured to burn the vanadium-containing fuel 14. The combustion system 10 also includes a fluid transfer device 16 configured to receive a portion of the combustor exhaust gas 18 and ambient air 20. The fluid transfer device 16 is configured further to channel the portion of the combustor exhaust gas 18 and the ambient air 20 to the combustor 12. The combustor 12 is configured to combust substantially stoichiometrically a reduced-oxygen mixture including the vanadium-containing fuel 14, ambient air 20, and portion of the combustor exhaust gas 18, where substantially all of the oxygen present in the combustor 12 is burned. The resultant combustor exhaust gas 22 may be substantially free of oxygen, e.g., containing less than 1% oxygen by volume. In one embodiment fluid transfer device 16 is a compressor. In other embodiments, fluid transfer device 16 may be any device that enables combustion system 10 to function as described herein.

In the exemplary embodiment, the combustion system 10 further includes an EGR system 26. The EGR system 26 includes a vanadium oxide particle separator 24 ("particle separator") configured to remove substantially all of the V₂O₃ particles and V₂O₄ particles present in the combustor exhaust gas 22 as the combustor exhaust gas flows through and contacts the particle separator 24. The combustor exhaust gas 22 may be split into at least two portions upon exit from particle separator 24. A portion of the combustor exhaust gas 18 is circulated to fluid transfer device 16. In one embodiment the remaining portion of the exhaust gas 28 is released to the atmosphere and in another embodiment, the remaining portion of the exhaust gas 28 is sent to a CO₂ separation unit (not shown) to separate CO₂ before being released to atmosphere.

The EGR system 26 may be used with the combustion system 10 to achieve a higher concentration of CO₂ in the combustor exhaust gas 22 of the combustion system 10 and to limit the formation of V₂O₅ in the combustor exhaust gas 22. V₂O₅ formation may be stopped by decreasing the oxygen content percentage in the reduced-oxygen mixture burned in the combustor 12 as the ambient air 20 is mixed with a portion of the combustor exhaust gas 18, which includes reduced oxygen levels. In addition, the EGR system 26 may be used to increase CO₂ levels in the combustor exhaust gas 22. In one embodiment, as discussed above, the remaining portion of the exhaust gas 28 is directed to a CO₂ separation unit. Any CO₂ separation technology may be utilized, e.g., amine treatment, PSA, membrane, etc. After separation, the CO₂ rich gas may be directed to a CO₂ conditioning system, including a CO₂ compression system. The increase in CO₂ concentration in the combustor exhaust gas 22 from the combustion system 10 enhances the efficiency of the CO₂ separation process. In some embodiments, the oxygen level in the reduced-oxygen mixture burned in combustor 12 ranges between approximately 14% to approximately 16% by volume and the oxygen level in the combustor exhaust gas 22 from the combustor 12 ranges between approximately 0% and approximately 1% by volume. This low level of oxygen results in facilitating the prevention of the formation of V₂O₅ and the increase of CO₂ concentrations up to approximately 10% by volume in the combustor exhaust gas 22.

FIG. 2 is a schematic view of another exemplary combustion system 100 of the exemplary combustion system 10 of FIG 1. As discussed with reference to FIG. 1, in one embodiment, a heat exchanger 30 may be connected in fluid communication to the EGR system 26 and configured to receive a portion of the combustor exhaust gas 18. The heat exchanger 30 may be provided to reduce the temperature of the portion of the combustor exhaust gas 18 to a range between approximately 60 degrees Fahrenheit (°F) to about 160 °F. The heat exchanger 30 may be incorporated into the EGR system 26 anywhere downstream of the particle separator 24. Alternatively or simultaneously, a blower 32 may be connected in fluid communication to the EGR system 26. In some embodiments, the blower 32 may be located in the EGR system 26 upstream of the heat exchanger 30. In other embodiments, the blower 32 may be located in the EGR system 26 downstream from the heat exchanger 30. The blower 32 may be configured to increase the pressure of the portion of the combustor exhaust gas 18 prior to delivery into the fluid transfer device 16 via the EGR system 26.

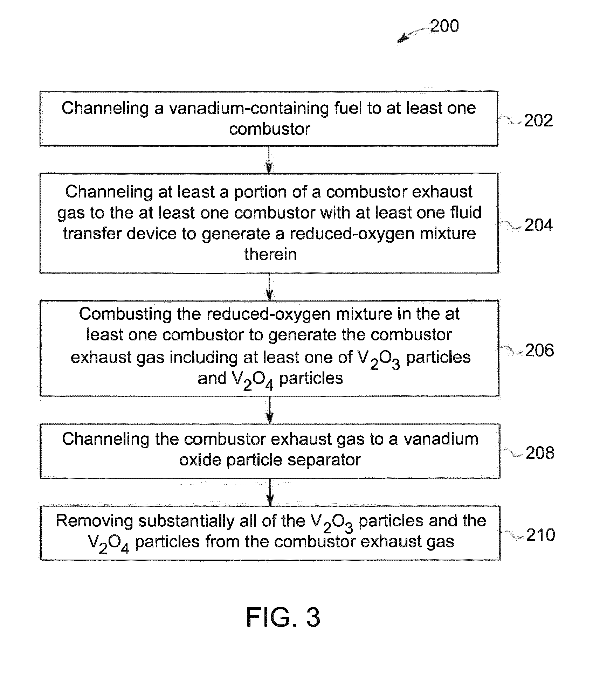

FIG. 3 is a flow chart of a method 200 for decreasing a concentration of at least one of vanadium trioxide (V₂O₃) and vanadium tetroxide (V₂O₄) particles in the exhaust gas of the exemplary combustion system 10 of FIG 1. During operation of the exemplary combustion system 10, a vanadium-containing fuel is channeled into at least one combustor 202. At least a portion of the combustor exhaust gas 18 is also channeled to the combustor 12 from fluid transfer device 16 to facilitate creating a reduced-oxygen mixture within the combustor 204. Furthermore, fluid transfer device 16 may channel ambient air 20 into combustor 12. Alternatively, ambient air 20 may be channeled to combustor 12 by a main air compressor. In another embodiment, a booster compressor may receive the ambient air 20 from the main air compressor and compress the ambient air 20 further before channeling it to the combustor 12.

In addition, during operation of the exemplary combustion system 10, the reduced-oxygen mixture in combustor 12 is combusted to generate the combustor exhaust gas 22 including at least one of V₂O₃ particles and V₂O₄ particles 206. In one embodiment, combustion of the reduced-oxygen mixture is performed substantially stoichiometrically to generate the combustor exhaust gas 22. The resultant combustor exhaust gas 22 may be substantially free of oxygen, e.g., containing less than 1% oxygen by volume. This low level of oxygen results in facilitating the prevention of the formation of V₂O₅ and the increase of CO₂ concentrations up to approximately 10% by volume in the combustor exhaust gas 22.

Further, during operation of the exemplary combustion system 10, the combustor exhaust gas 22 is channeled to a particle separator 208. The particle separator removes substantially all of the V₂O₃ particles and the V₂O₄ particles from the from the combustor exhaust gas 210. The removal of substantially all of the V₂O₃ particles and V₂O₄ particles present in the combustor exhaust gas 22 is accomplished as the combustor exhaust gas 22 flows through and contacts the particle separator 24.

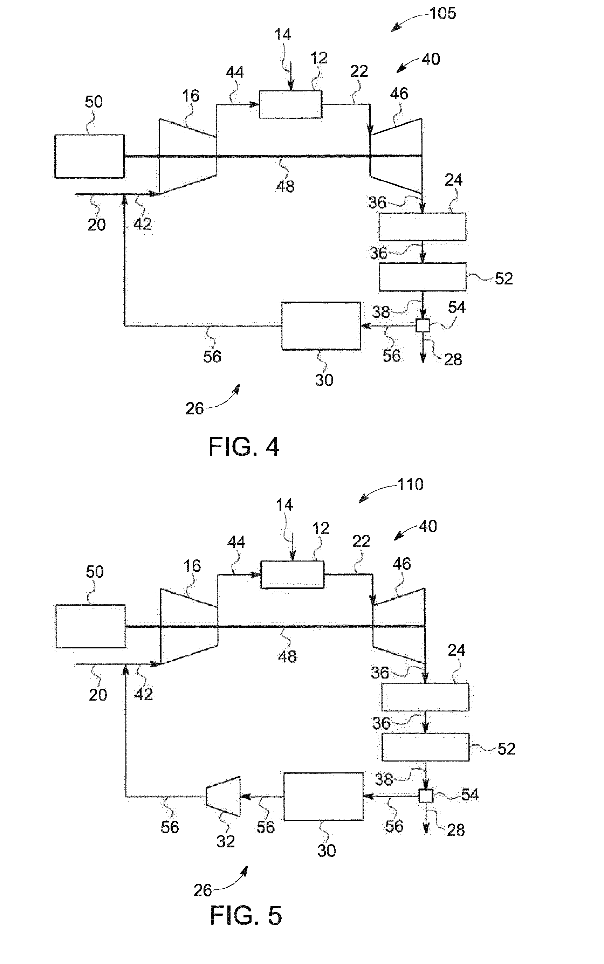

The particle separator 24 is useful in separating and removing vanadium oxide particles, such as V₂O₃ and V₂O₄, from at least one of the combustor exhaust gas 22 and turbine exhaust gas 36 (see generally, FIGs. 4-13) has not previously been used (or even suggested to applicants knowledge) for use with gas turbine engines burning vanadium-containing fuels 14, primarily because efforts for managing vanadium oxides, such as the corrosive V₂O₅, have focused on pretreating vanadium-containing fuels 14 with the use of inhibitors, such as magnesium additives, to convert the vanadium contaminates into solid magnesium vanadates.

In the exemplary combustion system, the particle separator 24 is generally located downstream of the combustor 12. The particle separator 24 may generally include a metal or ceramic substrate. The substrate may include any suitable structure, such as a monolith, honeycombed cells, a packed bed, reticulated foam, a long tube, multiple tubes, a grid or screen, a cylindrical shape, a plate, or the like. The substrate may be composed of or fabricated from high temperature materials such as metal alloys, ceramics, and the like. The structure of the substrate may generally be coated with an absorption material that operates to extract the vanadium oxides V₂O₃ and V₂O₄ from the exhaust gas. For example, the substrate may include a cylinder with a cross-section that includes honeycombed cells coated with an absorption material.

In other embodiments, the location of the particle separator 24 may vary. In one embodiment, the particle separator 24 may include an absorption material applied directly to the exhaust duct (not shown) between the turbine 46 and an HRSG 52 (see FIG. 4). In another embodiment, for example, under certain operating conditions and depending on the temperature at different points inside the gas turbine engine 40, it may be desirable to position the particle separator 24 inside the gas turbine engine upstream of the turbine 46, rather than utilize a separate downstream particle separator. In another embodiment, the particle separator 24 may be located within the combustor 12. In certain embodiments, the combustion system may include multiple particle separators 24, e.g., a first particle separator in the combustor 12, a second particle separator downstream of the turbine 46, and so forth.

The type of absorption materials useful for extracting vanadium oxide particles, such as V₂O₃ and V₂O₄, from the combustion exhaust gas 22 may vary based on the type of vanadium-containing fuel used. The absorption materials may include any suitable type of coating, e.g., elements such as titanium dioxide (TiO₂), aluminum oxide (Al₂O₃), zirconium dioxide (ZrO₂) (sometimes known as zirconia), silicon oxide (SiO₂), zeolites, washcoats, mesospheres, and other metal oxides and nitrates like alumina, silica, blends thereof, and the like. Table 1 below lists some, but not all, potentially suitable materials that may be used alone or together in various combinations as one or more absorption materials.

**Table 1: Examples of suitable absorption materials**

| | |
|---|---|
| Silicate | SiC |
| Silicate | MoSi₂ |
| Silicate/Oxide | slip cast clay / porcelain |
| Oxide | mullite |
| Oxide | barium titanate (BaTiO₃) |
| Oxide | SrTiO₃ |
| Oxide | Al₂O₃ |
| Oxide | gel aluminide |
| Oxide | TBC (yttria stabilized) |
| Oxide | Zr₂O₃ |
| Oxide | Fe₂O₃ |
| Oxide | CaO |
| Oxide | nickel oxide (NiO) |
| Ionics | phosphate alumina |
| Ionics | MgOH |
| Ionics | metal compounds of SO₄²⁻: FeSO₄, MgSO₄ |
| Ionics | metal compound of NO₃⁻ |
| Nitride/Oxide | hexagonal boron nitride (B₂O₃) |

Additionally, the absorption materials may be applied to the particle separator 24 as an easily removable coating to permit collection of the vanadium oxide particles after removal from the combustion exhaust gas 22. After removal of the coating for collection of the vanadium oxide particles, the particle separator substrate may be coated with a new layer of absorption material to further extract the vanadium oxides V₂O₃ and V₂O₄ from the exhaust gas.

In one embodiment, the absorption material may be chemically removed using a simple solvent, such as water, alcohol, ethanol, ethylene glycol, degreasers, detergents, or the like while remaining benign to combustion and turbine materials. In another embodiment, the absorption material may be mechanically removed by the application of mechanical forces, such as ultrasonic vibrations, pressure waves, and mechanical impact among others. If the absorption material is water soluble, the absorption material may be dissolved during an engine water wash. In another embodiment, a detergent or other simple solvent may be directed through the particle separator 24 to remove the absorption material. In certain embodiments, after use of a simple solvent other than water, a water wash may be performed to flush any remaining solvent from the particle separator 24. In some embodiments, ablation, ultrasonic vibrations, or a shockwave, etc. may be applied to the particle separator 24 to break up the absorption material. For example, the absorption material may be removed with mechanical vibration and/or pressure waves, e.g., by applying acoustic waves from an acoustic horn or speaker or by applying pressure waves from a combustion-driven device. By further example, the absorption material also may be removed with heat, e.g., by gradually thermally degrading the absorption material until it is completely removed over a limited period. After vibration, heat, mechanical, and/or other means for removal, a water wash may be applied to flush the fragments of the absorption material from the particle separator 24. After removal of the absorption material for collection of the vanadium oxide particels,

FIG. 4 is a schematic view of an exemplary power generation system 105 including at least one gas turbine engine 40 that bums a vanadium-containing fuel 14 using the exemplary combustion system 10 of FIG. 1. The gas turbine engine 40 includes a combustor 12 configured to burn the vanadium-containing fuel 14. The gas turbine engine 40 is also includes a compressor, or fluid transfer device 16 configured to receive a reduced-oxygen gas 42 and supply a compressed reduced-oxygen gas 44 to the combustor 12. In operation, the portion of the exhaust gas 56 is mixed with the ambient air 20 to generate the reduced-oxygen gas 42. In some embodiments, the term "reduced-oxygen gas" refers to an oxygen content of below approximately 1% by volume. The gas turbine engine 40 also includes a turbine 46 configured to receive the combustor exhaust gas 22 from the combustor 12, extract work from the combustor exhaust gas 22, and discharge the turbine exhaust gas 36. The compressor 16 and the turbine 46 are rotatably coupled to the gas turbine shaft 48. As the turbine 46 expands the combustor exhaust gas 22, it rotates the gas turbine shaft 48. The gas turbine shaft 48 rotates the generator 50, thereby generating electrical energy.

It is understood that the compressed reduced-oxygen gas 44 from the compressor 16 may include any suitable gas containing oxygen, for example, air, oxygen-rich air, and oxygen-depleted air. The combustion process in the combustor 12 generates the combustor exhaust gas 22.

In some embodiments, the power generation system 105 further includes an EGR system 26. The EGR system 26 includes a particle separator 24 configured to remove substantially all of the V₂O₃ particles and V₂O₄ particles present in the turbine exhaust gas 36 as the turbine exhaust gas 36 flows through and contacts the particle separator 24. In addition, the EGR system 26 may include a heat recovery steam generator (HRSG) 52 configured to receive the turbine exhaust gas 36 and generate steam. A steam turbine may be further configured to generate additional electricity using the steam from the HRSG 52, and the steam turbine may be connected to a steam generator. In some embodiments, the steam turbine may be arranged to be connected to the turbine shaft 48. A heat exchanger 30 may be configured to receive a portion of the exhaust gas 56. In some embodiments, the EGR system 26 may not contain an HRSG 52 and the turbine exhaust gas 36 may instead be introduced directly into a splitter 54 upon exit from the particle separator 24. In still other embodiments, the EGR system 26 may not include the heat exchanger 30.

As illustrated, the combustor exhaust gas 22 from the combustor 12 may be provided to the turbine 46. As indicated, the power generation system 105 includes a generator 50 attached to the gas turbine engine 40. In some embodiments, the turbine shaft 48 may be a "cold-end drive" configuration, meaning that the turbine shaft 48 may connect to the generator 50 at the compressor end of the gas turbine engine 40. In other embodiments, the turbine shaft 48 may be a "hot-end drive" configuration, meaning that the turbine shaft 48 may connect to the generator 50 at the turbine end of the gas turbine engine 40. The thermodynamic expansion of the combustor exhaust gas 22 fed into the turbine 46 produces power to drive the gas turbine engine 40, which, in turn, generates electricity through the generator 50. In the exemplary embodiment, the generator 50 may be connected to an electrical power grid such that electrical energy produced by the generator 50 is provided to the grid (not shown). The expanded turbine exhaust gas 36 from the turbine 46 may be fed to the particle separator 24 and then to the HRSG 52. The temperature of the turbine exhaust gas 36 discharged by the turbine 46 ranges between approximately 500 degrees Fahrenheit (°F) to about 1300 °F and the exhaust gas 38 discharged by the HRSG 52 is at a temperature that ranges between approximately 60 °F to about 400 °F.

In one embodiment, the EGR system 26 further includes a splitter 54 configured to split the exhaust gas 38 into at least two portions. A portion of the exhaust gas 56 is circulated to the compressor 16 through the EGR system 26. In one embodiment the remaining portion of exhaust gas 28 is released to the atmosphere and in another embodiment, the remaining portion of exhaust gas 28 is sent to a CO₂ separation unit (not shown) to separate CO₂ before being released to atmosphere. The portion of exhaust gas 56 may be sent to the heat exchanger 30. The heat exchanger 30 may be provided to reduce further the temperature of the portion of exhaust gas 56 to a range between approximately 60 °F to about 160 °F. The heat exchanger 30 may be incorporated into the EGR system 26 anywhere downstream of the turbine 46.

The vanadium-containing fuel 14 may include any suitable vanadium-containing fuels, such as residual fuel oils. The combustor exhaust gas 22 from the combustor 12 may include vanadium oxides (V_{X}O_{Y}), water, carbon dioxide (CO₂), carbon monoxide (CO), nitrogen (N₂), nitrogen oxides (NO_{X}), sulfur oxides (SO_{X}), unburned fuel, and other organic compounds.

The EGR system 26 may be used with the gas turbine engine 40 to achieve a higher concentration of CO₂ in the working fluid of the gas turbine engine 40 and to limit the formation of V₂O₅ formation. V₂O₅ formation from the combustor 12 is stopped by decreasing the oxygen content percentage in the compressed reduced-oxygen gas 44 as the ambient air 20 is mixed with the portion of exhaust gas 56, which includes reduced oxygen levels. In addition, the EGR system 26 may be used to increase CO₂ levels in the exhaust gas 38. In one embodiment, as discussed above, the remaining portion of exhaust gas 28 is directed to a CO₂ separation unit. Any CO₂ separation technology may be utilized, e.g., amine treatment, PSA, membrane, etc. After separation, the CO₂ rich gas may be directed to a CO₂ conditioning system, including a CO₂ compression system. The increase in CO₂ concentration in the exhaust gas 38 from the gas turbine engine 40 enhances the efficiency of the CO₂ separation process. In some embodiments, the oxygen level in the compressed reduced-oxygen gas 44 ranges between approximately 14% to approximately 16% by volume and the oxygen level in the combustor exhaust gas 22 from the combustor 12 ranges between approximately 0% and approximately 1% by volume. This lower level of oxygen facilitates preventing the formation of V₂O₅ and increases of CO₂ concentrations up to approximately 10% by volume in the combustor exhaust gas 22 from the combustor 12.

FIG. 5 is a schematic view of an exemplary power generation system 110 of the exemplary power generation system 105 of FIG. 4. As discussed with reference to FIG. 4, in one embodiment, a blower 32 may be connected in fluid communication to the EGR system 26. In some embodiments, the blower 32 may be located in the EGR system 26 upstream of or downstream from the heat exchanger 30. The blower 32 may be configured to increase the pressure of the portion of exhaust gas 56 prior to delivery into the compressor 16 via the EGR system 26.

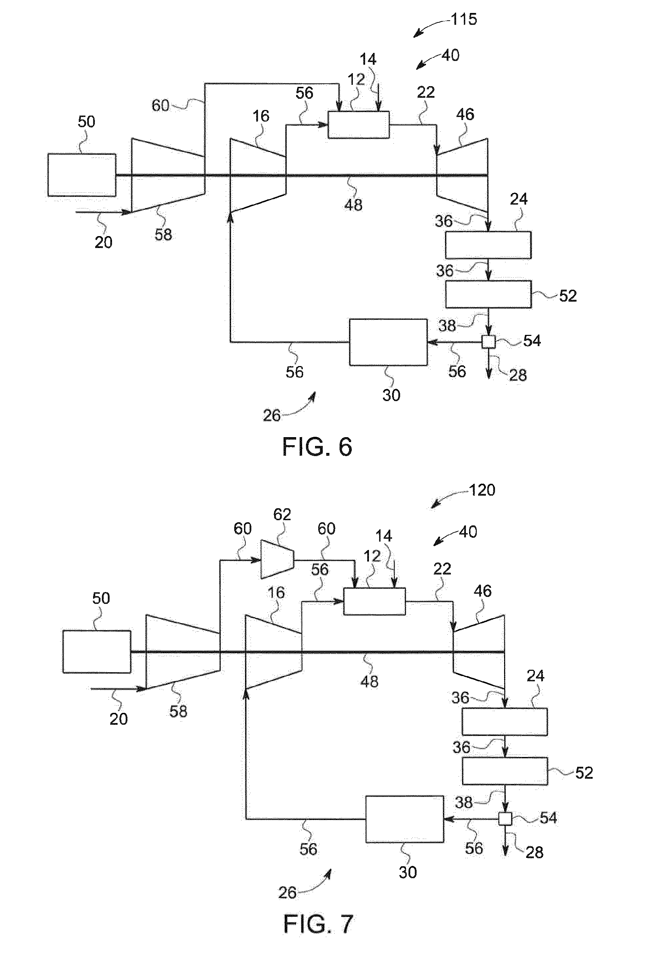

FIG. 6 is a schematic view of another exemplary power generation system 115 of the exemplary power generation system 105 of FIG. 4. As discussed with reference to FIG. 4, in one embodiment, the power generation system 115 may include a main air compressor 58 configured to compress ambient air 20 into compressed ambient air 60. The main air compressor 58 may be connected in fluid communication upstream of the combustor 12. As shown, the main air compressor 58 may be driven by the power generated by the gas turbine engine 40 via the turbine shaft 48. As shown, compressor 16 is configured to receive a portion of the exhaust gas 56 and channel it to combustor 12 for generating a reduced-oxygen mixture therein.

FIG. 7 is a schematic view of another exemplary power generation system 120 of the exemplary power generation system arrangements of FIGS. 4 and 6. As discussed with reference to FIGS. 4 and 6, in one embodiment, the power generation system 120 may include a main air compressor 58 configured to compress ambient air 20 into compressed ambient air 60. The main air compressor 58 may be connected in fluid communication upstream of the combustor 12. As shown, the main air compressor 58 may be driven by the power generated by the gas turbine engine 40 via the turbine shaft 48. Compressor 16 is configured to receive a portion of the exhaust gas 56 and channel it to combustor 12 for generating a reduced-oxygen mixture therein. Furthermore, in one embodiment, a booster compressor 62 may be included downstream of and in fluid communication with the main air compressor 58 and upstream of and in fluid communication with the combustor 12. The booster compressor 62 may be configured to compress further the compressed ambient air 60 before delivery into combustor 12.

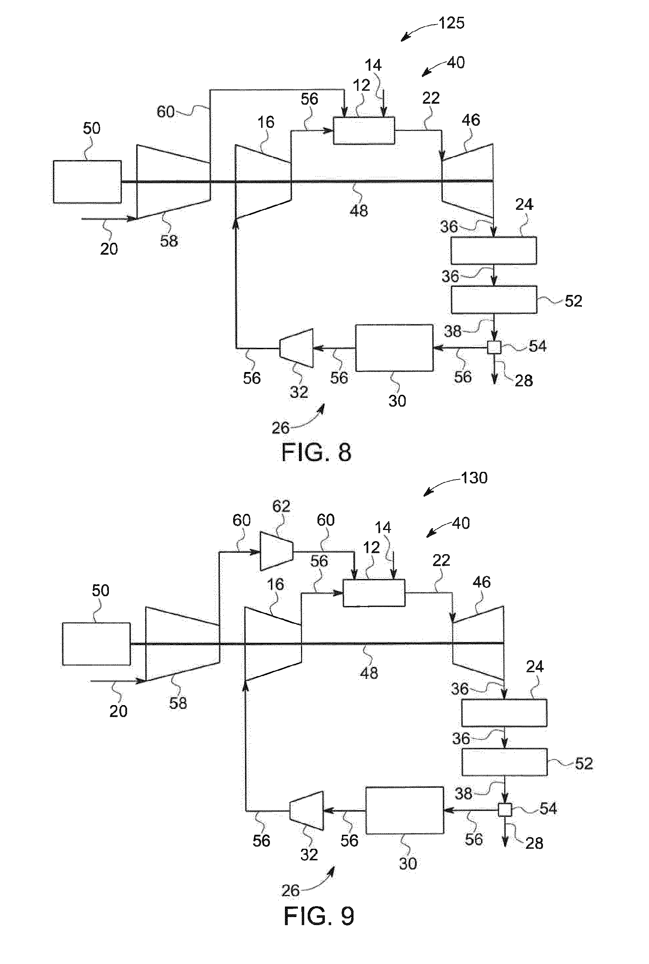

FIG. 8 is a schematic view of another exemplary power generation system 125 of the exemplary power generation system arrangements of FIGS. 4, 5, and 6. As discussed with reference to FIGS. 4, 5, and 6, in one embodiment, a blower 32 may be connected in fluid communication to the EGR system 26. In some embodiments, the blower 32 may be located in the EGR system 26 upstream of or downstream from the heat exchanger 30. The blower 32 may be configured to increase the pressure of the portion of exhaust gas 56 prior to delivery into the compressor 16 via the EGR system 26. Furthermore, in one embodiment, the power generation system 125 may include a main air compressor 58 configured to compress ambient air 20 into compressed ambient air 60. The main air compressor 58 may be connected in fluid communication upstream of the combustor 12. As shown, the main air compressor 58 may be driven by the power generated by the gas turbine engine 40 via the turbine shaft 48. Compressor 16 is configured to receive a portion of the exhaust gas 56 and channel it to combustor 12 for generating a reduced-oxygen mixture therein.

FIG. 9 is a schematic view of another exemplary power generation system 130 of the exemplary power generation system arrangements of FIGS. 4, 7, and 8. As discussed with reference to FIGS. 4, 7, and 8, in one embodiment, the power generation system 130 may include a main air compressor 58 configured to compress ambient air 20 into compressed ambient air 60. The main air compressor 58 may be connected in fluid communication upstream of the combustor 12. As shown, the main air compressor 58 may be driven by the power generated by the gas turbine engine 40 via the turbine shaft 48. Compressor 16 is configured to receive a portion of the exhaust gas 56 and channel it to combustor 12 for generating a reduced-oxygen mixture therein. Furthermore, in one embodiment, a booster compressor 62 may be included downstream of and in fluid communication with the main air compressor 58 and upstream of and in fluid communication with the combustor 12. The booster compressor 62 may be configured to compress further the compressed ambient air 60 before delivery into the combustor 12. Additionally, a blower 32 may be connected in fluid communication to the EGR system 26. In some embodiments, the blower 32 may be located in the EGR system 26 upstream of or downstream from the heat exchanger 30. The blower 32 may be configured to increase the pressure of the portion of exhaust gas 56 prior to delivery into the compressor 16 via the EGR system 26.

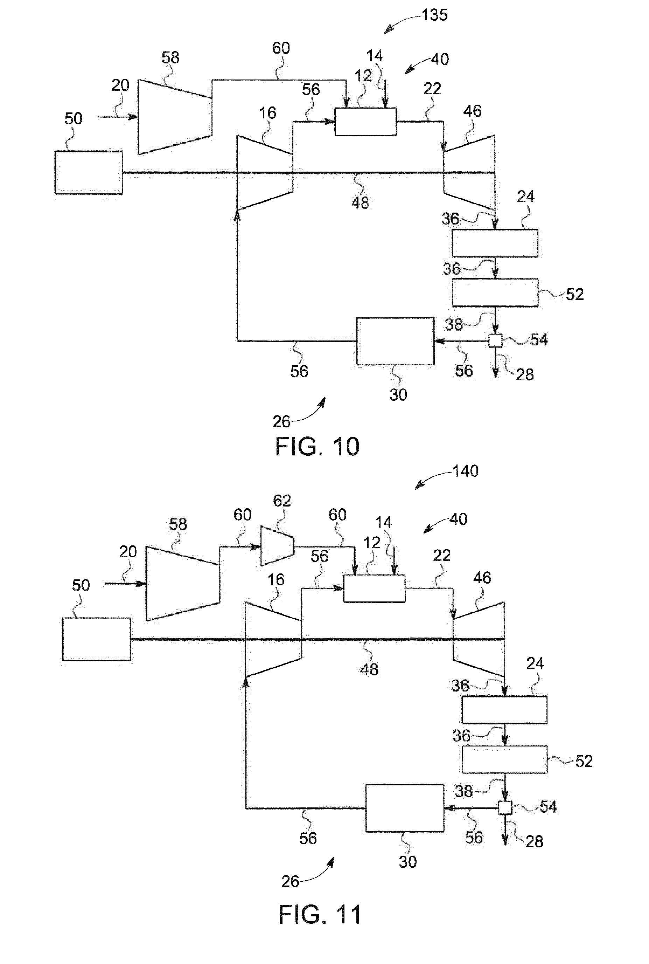

FIG. 10 is a schematic view of another exemplary power generation system 135 of the exemplary power generation system arrangements of FIGS. 4 and 7. As discussed with reference to FIGS. 4 and 7, in one embodiment, the power generation system 135 may include a main air compressor 58 configured to compress ambient air 20 into compressed ambient air 60. The main air compressor 58 may be connected in fluid communication upstream of the combustor 12. As shown, the main air compressor 58 may not be driven by the power generated by gas turbine engine 40 via turbine shaft 48. Furthermore, in one embodiment, the main air compressor 58 may not be connected to the turbine shaft 48. Compressor 16 is configured to receive a portion of the exhaust gas 56 and channel it to combustor 12 for generating a reduced-oxygen mixture therein.

FIG. 11 is a schematic view of another exemplary power generation system 140 of the exemplary power generation system arrangements of FIGS. 4, 7, and 10. As discussed with reference to FIGS. 4, 7, and 10, in one embodiment, the power generation system 140 may include a main air compressor 58 configured to compress ambient air 20 into compressed ambient air 60. The main air compressor 58 may be connected in fluid communication upstream of the combustor 12. As shown, the main air compressor 58 may not be driven by the power generated by the gas turbine engine 40 via the turbine shaft 48. Further, in one embodiment, the main air compressor 58 may not be connected to the turbine shaft 48. Compressor 16 is configured to receive a portion of the exhaust gas 56 and channel it to combustor 12 for generating a reduced-oxygen mixture therein. Furthermore, in one embodiment, a booster compressor 62 may be included downstream of and in fluid communication with the main air compressor 58 and upstream of and in fluid communication with the combustor 12. The booster compressor 62 may be configured to compress further the compressed ambient air 60 before delivery into combustor 12.

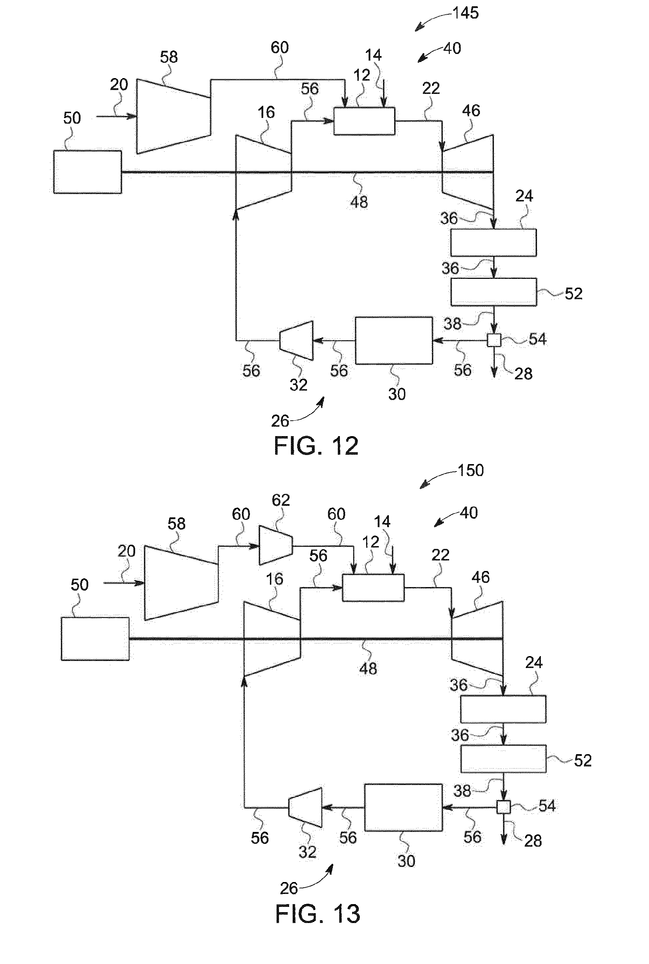

FIG. 12 is a schematic view of another exemplary power generation system 145 of the exemplary power generation system arrangements of FIGS. 4, 5, and 10. As discussed with reference to FIGS. 4, 5, and 10, in one embodiment, a blower 32 may be connected in fluid communication to the EGR system 26. In some embodiments, the blower 32 may be located in the EGR system 26 upstream of or downstream from the heat exchanger 30. The blower 32 may be configured to increase the pressure of the portion of exhaust gas 56 prior to delivery into the compressor 16 via the EGR system 26. Further, in one embodiment, the power generation system 145 may include a main air compressor 58 configured to compress ambient air 20 into compressed ambient air 60. The main air compressor 58 may be connected in fluid communication upstream of the combustor 12. As shown, the main air compressor 58 may not be driven by the power generated by the gas turbine engine 40 via the turbine shaft 48. Furthermore, in one embodiment, the main air compressor 58 may not be connected to the turbine shaft 48. Compressor 16 is configured to receive a portion of the exhaust gas 56 and channel it to combustor 12 for generating a reduced-oxygen mixture therein.

FIG. 13 illustrates another exemplary power generation system 150 of the exemplary power generation system arrangements of FIGS. 4, 11, and 12. As discussed with reference to FIGS. 4, 11, and 12, in one embodiment, the power generation system 150 may include a main air compressor 58 configured to compress ambient air 20 into compressed ambient air 60. The main air compressor 58 may be connected in fluid communication upstream of the combustor 12. As shown, the main air compressor 58 may not be driven by the power generated by the gas turbine engine 40 via the turbine shaft 48. Further, in one embodiment, the main air compressor 58 may not be connected to the turbine shaft 48. Compressor 16 is configured to receive a portion of the exhaust gas 56 and channel it to combustor 12 for generating a reduced-oxygen mixture therein. Furthermore, in one embodiment, a booster compressor 62 may be included downstream of and in fluid communication with the main air compressor 58 and upstream of and in fluid communication with the combustor 12. The booster compressor 62 may be configured to further compress the compressed the ambient air 60 before delivery into the combustor 12. Additionally, in some embodiments, a blower 32 may be connected in fluid communication to the EGR system 26. In some embodiments, the blower 32 may be located in the EGR system 26 upstream of or downstream from the heat exchanger 30. The blower 32 may be configured to increase the pressure of the portion of exhaust gas 56 prior to delivery into the compressor 16 via the EGR system 26.

Exemplary embodiments of systems and methods for burning low-grade, vanadium-containing fuels without the use of vanadium oxide inhibitors, such as magnesium additives, are described above in detail. The systems and methods are not limited to the specific embodiments described herein, but rather, operations of the methods and components of the systems may be utilized independently and separately from other operations or components described herein. For example, the systems and methods described herein may have other industrial or consumer applications and are not limited to practice with gas turbine engines as described herein. Rather, one or more embodiments may be implemented and utilized in connection with other industries.

Although specific features of various embodiments of the invention may be shown in some drawings and not in others, this is for convenience only. In accordance with the principles of the invention, any feature of a drawing may be referenced or claimed in combination with any feature of any other drawing.

This written description uses examples to disclose the invention, including the best mode, and to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A combustion system comprising:
   a vanadium-containing fuel supply;
   at least one combustor configured to:
      generate a combustor exhaust gas including at least one of vanadium trioxide (V₂O₃) particles and vanadium tetroxide (V₂O₄) particles; and
      combust a reduced-oxygen mixture comprising the vanadium-containing fuel, ambient air, and at least a portion of the combustor exhaust gas, thereby facilitating the prevention of vanadium pentoxide (V₂O₅) particle formation; and
      a particle separator configured to receive the combustor exhaust gas and remove substantially all of the V₂O₃ particles and the V₂O₄ particles from the combustor exhaust gas.
2. The system in accordance with Clause 1, wherein said particle separator comprises at least one layer of an absorption material formed on at least one of a metal substrate and a ceramic substrate.
3. The system in accordance with Clause 1 or 2, wherein said absorption material comprises at least one of titanium dioxide (TiO₂), aluminum oxide (Al₂O₃), zirconium dioxide (ZrO₂), silicon oxide (SiO₂), zeolites, washcoats, and mesospheres.
4. The system in accordance with any preceding clause, wherein said at least one combustor is further configured for substantially stoichiometric combustion.
5. The system in accordance with any preceding clause, further comprising an exhaust gas recirculation (EGR) system configured to channel the at least a portion of the combustor exhaust gas to said combustor.
6. The system in accordance with any preceding clause, further comprising at least one fluid transfer device coupled in flow communication with said at least one combustor, said at least one fluid transfer device configured to channel at least one of ambient air and the at least a portion of the combustor exhaust gas to said at least one combustor.
7. The system in accordance with any preceding clause, wherein said EGR system comprises at least one heat exchanger coupled in flow communication downstream of said particle separator and configured to remove at least a portion of heat energy from the at least a portion of the combustion exhaust gas.
8. A method for combusting fuel comprising:
   channeling a vanadium-containing fuel to at least one combustor;
   channeling at least a portion of a combustor exhaust gas to the at least one combustor to generate a reduced-oxygen mixture including the vanadium-containing fuel, ambient air, and at least a portion of the combustor exhaust gas;
   combusting the reduced-oxygen mixture in the at least one combustor to generate the combustor exhaust gas including at least one of vanadium trioxide (V₂O₃) particles and vanadium tetroxide (V₂O₄) particles, wherein combusting the reduced-oxygen mixture facilitates preventing vanadium pentoxide (V₂O₅) particle formation;
   channeling the combustor exhaust gas to a particle separator; and
   removing substantially all of the V₂O₃ particles and the V₂O₄ particles from the combustor exhaust gas.
9. A method in accordance with any preceding clause, wherein combusting the reduced-oxygen mixture is performed substantially stoichiometrically to generate the combustor exhaust gas substantially free of oxygen.
10. A method in accordance with any preceding clause, wherein removing substantially all of the V₂O₃ particles and the V₂O₄ particles from the combustor exhaust gas further comprises forming at least one layer of an absorption material on at least one of a metal substrate and a ceramic substrate.
11. A method in accordance with any preceding clause, wherein the absorption material includes at least one of titanium dioxide (TiO₂), aluminum oxide (Al₂O₃), zirconium dioxide (ZrO₂), silicon oxide (SiO₂), zeolites, washcoats, and mesospheres.
12. A method in accordance with any preceding clause, further comprising channeling ambient air to the at least one combustor with a main air compressor.
13. A method in accordance with any preceding clause, wherein channeling ambient air includes combining the ambient air and the at least a portion of the combustor exhaust gas upstream of the main air compressor.
14. A power generation system comprising:
   a vanadium-containing fuel supply;
   at least one gas turbine engine comprising:
      a rotatable shaft;
      at least one combustor configured to:
         generate a combustor exhaust gas including at least one of vanadium trioxide (V₂O₃) and vanadium tetroxide (V₂O₄) particles; and
         combust a reduced-oxygen mixture comprising the vanadium-containing fuel, ambient air, and at least a portion of the combustor exhaust gas, thereby facilitating the prevention of vanadium pentoxide (V₂O₅) particle formation;
         at least one compressor rotatably coupled to said rotatable shaft, said at least one compressor coupled in flow communication with said at least one combustor; and
         at least one turbine rotatably coupled to said rotatable shaft, said at least one turbine coupled in flow communication downstream of said at least one combustor and configured to receive and extract energy from the combustor exhaust gas, and discharge a turbine exhaust gas; and
         a particle separator configured to receive at least one of the combustor exhaust gas and the turbine exhaust gas, said particle separator configured to remove substantially all of the V₂O₃ particles and the V₂O₄ particles from the combustor exhaust gas and the turbine exhaust gas.
15. The system in accordance with any preceding clause, wherein said particle separator is positioned upstream of said at least one turbine.
16. The system in accordance with any preceding clause, wherein said at least one compressor comprises a main air compressor coupled in flow communication upstream of said at least one combustor, said main air compressor configured to compress ambient air and discharge compressed ambient air to said at least one combustor.
17. The system in accordance with any preceding clause, wherein said at least one compressor further comprises a booster compressor coupled in flow communication downstream from said main air compressor and upstream from said at least one combustor, said booster compressor configured to further compress the compressed ambient air.
18. The system in accordance with any preceding clause, further comprising an exhaust gas recirculation (EGR) system configured to channel the at least a portion of the turbine exhaust gas to said at least compressor.
19. The system in accordance with any preceding clause, wherein said particle separator is positioned downstream from said at least one turbine.
20. The system in accordance with any preceding clause, further comprising a heat recovery steam generator (HRSG) coupled in flow communication downstream from said particle separator, said HRSG configured to receive the turbine exhaust gas for generating steam.

## Claims

1. A combustion system (10) comprising:
a vanadium-containing fuel (14) supply;
at least one combustor (12) configured to:
generate a combustor exhaust gas (22) including at least one of vanadium trioxide (V₂O₃) particles and vanadium tetroxide (V₂O₄) particles; and
combust a reduced-oxygen mixture comprising the vanadium-containing fuel (14), ambient air (20), and at least a portion of the combustor exhaust gas (18), thereby facilitating the prevention of vanadium pentoxide (V₂O₅) particle formation; and
a particle separator (24) configured to receive the combustor exhaust gas (22) and remove substantially all of the V₂O₃ particles and the V₂O₄ particles from the combustor exhaust gas (22).

2. The system in accordance with Claim 1, wherein said particle separator (24) comprises at least one layer of an absorption material formed on at least one of a metal substrate and a ceramic substrate, wherein said absorption material comprises at least one of titanium dioxide (TiO₂), aluminum oxide (Al₂O₃), zirconium dioxide (ZrO₂), silicon oxide (SiO₂), zeolites, washcoats, and mesospheres.

3. The system in accordance with either of Claim 1 or 2, wherein said at least one combustor (12) is further configured for substantially stoichiometric combustion.

4. The system in accordance with any preceding Claim, further comprising an exhaust gas recirculation (EGR) system (26) configured to channel the at least a portion of the combustor exhaust gas (18) to said combustor (12).

5. The system in accordance with Claim 4, further comprising at least one fluid transfer device (16) coupled in flow communication with said at least one combustor (12), said at least one fluid transfer device (16) configured to channel at least one of ambient air (20) and the at least a portion of the combustor exhaust gas (18) to said at least one combustor (12).

6. The system in accordance with either of Claim 4 or 5, wherein said EGR system (26) comprises at least one heat exchanger (30) coupled in flow communication downstream of said particle separator (24) and configured to remove at least a portion of heat energy from the at least a portion of the combustion exhaust gas (18).

7. A method for combusting fuel (200) comprising:
channeling a vanadium-containing fuel (14) to at least one combustor (12);
channeling at least a portion of a combustor exhaust gas (18) to the at least one combustor (12) to generate a reduced-oxygen mixture including the vanadium-containing fuel (14), ambient air (20), and at least a portion of the combustor exhaust gas (18);
combusting the reduced-oxygen mixture in the at least one combustor (12) to generate the combustor exhaust gas (22) including at least one of vanadium trioxide (V₂O₃) particles and vanadium tetroxide (V₂O₄) particles, wherein combusting the reduced-oxygen mixture facilitates preventing vanadium pentoxide (V₂O₅) particle formation;
channeling the combustor exhaust gas (22) to a particle separator (24); and
removing substantially all of the V₂O₃ particles and the V₂O₄ particles from the combustor exhaust gas (22).

8. A method in accordance with Claim 7, wherein combusting the reduced-oxygen mixture is performed substantially stoichiometrically to generate the combustor exhaust gas (22) substantially free of oxygen.

9. A method in accordance with either of Claim 7 or 8, further comprising channeling ambient air (20) to the at least one combustor (12) with a main air compressor (58).

10. A method in accordance with Claim 9, wherein channeling ambient air (20) includes combining the ambient air (20) and the at least a portion of the combustor exhaust gas (18) upstream of the main air compressor (58).
